# EUROPEAN PATENT SPECIFICATION

(11) **EP 2 512 793 B1**
(45) Date of publication and mention of the grant of the patent: **25.01.2017**
(21) Application number: 10795570.0
(22) Date of filing: 14.12.2010
(51) Int. Cl.: B32B 1/08, B32B 27/34, F16L 11/04

(54) **MULTILAYER STRUCTURES COMPRISING A BARRIER LAYER AND THEIR USE TO CONVEY FLUIDS**
BARRIERESCHICHT ENTHALTENDE MULTISCHICHTSTRUKTUREN UND IHRE VERWENDUNG ZUR BEVÖRDERUNG VON FLÜSSIGKEITEN
STRUCTURES MULTICOUCHES COMPRENANT UNE COUCHE BARRIERE ET LEUR UTILISATION POUR LE TRANSPORT DE FLUIDES

(30) Priority: 16.12.2009 US 286996 P
(43) Date of publication of application: 24.10.2012
(73) Proprietor: E. I. du Pont de Nemours and Company, Wilmington, DE 19898 (US)
(72) Inventor: DOSHI, Shailesh, Kingston, Ontario K7P 1S5 (CA)
(74) Representative: Heinemann, Monica
(86) International application number: PCT/US2010/060299
(87) International publication number: WO 2011/084423

(56) References cited:
- EP-A1- 0 826 731
- EP-A1- 1 860 134
- EP-A2- 0 685 505
- WO-A1-2005/078327
- WO-A2-2004/052645
- US-A1- 2003 124 288

## Description

### FIELD OF THE INVENTION

The present invention relates to the field of multilayer structures comprising a polyamide layer and a barrier layer, and more particularly it related to multilayer structures that are particularly suitable for conveying fuels.

### BACKGROUND OF THE INVENTION

Hollow structures made of thermoplastic are well known for a variety of applications, like for example in the building industry for water pipes, radiator pipes or floor-heating pipes or in automotive conduits to carry many different fluids or liquid media, and are desired to display a balance of properties including thermal, mechanical and chemical resistances. In the automotive industry for example, and especially for structures made of thermoplastic materials and used to convey fluids, such structures (pipes, ducts, conduits, tubes, tubings, etc.) are desired to exhibit good mechanical properties, flexibility, impermeability and chemical resistance to the fluid(s) being conveyed.

Such structures need to be flexible for ease of installation and use, and often must be shaped into curves and bends for connecting components already installed into fixed positions without kinking.

Such structures need to have resistance to permeability of the fluid being conveyed so that they do not suffer from delamination and/or so that the fluid being conveyed does not leak.

Polyamides are a desirable material to use for hoses or pipes they have good chemical resistance, good physical properties, and can be conveniently formed into hollow structures with a variety of diameters and incorporated into multilayer structures. Long-chain polyamides, especially polyamide 12 and polyamide 11, are commonly used in hollow structures because of their mechanical strength and toughness, their high temperature resistance and chemical resistance to salts and other environmental agents. However, polyamide 11 and polyamide 12 do not provide good impermeability to automotive fuels such as gasoline, oxygenated and alcohol containing gasoline and diesel. Such a poor barrier property results in the deterioration of the structure upon use and time leading to a loss of the contained fuel which is undesirable.

Multilayer structures have been developed to overcome such problems. The layers of such structures often comprise dissimilar materials to satisfy specified performance criteria by placing different materials at the most appropriate position in the structure. For example, multilayer structures comprising an outer layer made of polyamide 11 or polyamide 12 and a barrier layer have been developed. While fluoropolymers may be used as barrier layer, they are expensive. Due to its impermeability to fuels, non-polar solvents, polar solvents and oxygen, ethylene vinyl alcohol (EVOH) is used as a highly effective barrier layer.

German Pat. 40 01 126 discloses a motor vehicle pipeline comprising an outer layer made of polyamide 11 and polyamide 12, a barrier layer made of EVOH and an inner layer made of polyamide 6. While polyamide 6 adhered to EVOH without any adhesion promoter, EVOH is incompatible with polyamide 11 and polyamide 12. For this reason, an adhesion-promoting layer (also called tie layer) made from maleic anhydride functionalized polyethylene or polypropylene is required and used between the outer layer and the barrier layer.

As mentioned above, due to its high adhesion to EVOH, polyamide 6 would be used as outer layer of a multilayer structure comprising a barrier layer made of EVOH, however, polyamide 6 is considered to be unsuited to be used in automotive applications due to its susceptibility to stress cracking if it comes into contact with salt such as zinc chloride.

Unfortunately, the existing technologies that are used for conveying a fluid (e.g. a gas or a liquid), in particular fuel, require the presence of at least one tie layer between the outer layer made of a polyamide and the barrier layer. The use of such tie layers increases the complexity and cost of the overall manufacturing process of the multilayer structure and also reduces the thermal stability of the structure since tie layers made of functionalized polyolefins have low heat resistance.

A need remains for multilayer structures comprising a polyamide layer directly adhered to a barrier layer made of EVOH for conveying fluids, in particular fuels, that have a good balance of properties in terms of flexibility, impermeability to the fluid being conveyed and a good adhesion between the polyamide layer and the EVOH layer without using a tie layer.

### SUMMARY OF THE INVENTION

There is disclosed a multilayer structure which is in the form of a hollow body for conveying fluid, wherein the hollow body is a tube comprising:
A) a polyamide layer made of a polyamide composition, and
B) a barrier layer made of ethylene vinyl alcohol copolymers (EVOH),
   wherein the polyamide layer is directly adhered to the barrier layer, and
   wherein the polyamide composition comprises one or more semi-aromatic copolyamides selected from copolyamides made from:
      a) group A monomers selected from:
         i) aromatic dicarboxylic acids having 8 to 20 carbon atoms and aliphatic diamines having 4 to 20 carbon atoms; or
         ii) aliphatic dicarboxylic acids having 6 to 20 carbon atoms and aromatic diamine having 6 to 20 carbon atoms; or
         iii) aromatic aminocarboxylic acids having 7 to 20 carbon atoms, and
      b) group B monomers selected from:
         iv) aliphatic dicarboxylic acids having 6 to 20 carbon atoms and aliphatic diamines having 4 to 20 carbon atoms; or
         v) lactams and/or aliphatic aminocarboxylic acids having 4 to 20 carbon atoms,
wherein the monomers of group A are present in an amount from at or about 10 mole-percent to at or about 40 mole-percent based on the copolyamide, and the monomers of group B are present in an amount from at or about 60 mole-percent to at or about 90 mole-percent based on the copolyamide.

Further described herein is a use of the multilayer structure described above for conveying a fluid, particularly fuel.

Further described herein is a method for conveying a fluid, particularly fuel, said method comprising passing the fuel through the multilayer structure described above.

### DETAILED DESCRIPTION OF THE INVENTION

As used throughout the specification, the phrases "about" and "at or about" are intended to mean that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such.

The terms "pipe", "duct", "conduit", "tube" and "tubing" are used interchangeably herein to denote a hollow body, i.e. any structure having an empty or concave interior part, used to convey a fluid.

The term "fluid" refers to a substance that flows and conforms to the outline of its container, a fluid can be a liquid or a gas.

"Directly adhered", as applied to layers, refers to the adhesion of one of the layer to another layer without an intervening tie layer, adhesive layer, or adhesion-promoting layer.

"Barrier" and "barrier layer", as applied to multilayer structures, refer to the ability of a structure or layer to serve as a barrier to a fluid (e.g. a gas or a liquid).

The multilayer structure according to the present invention comprises a polyamide layer and a barrier layer such that the two layers are directly adhered to each other.

"EVOH" refers to an ethylene vinyl alcohol copolymer. Preferably, the EVOH used in the multilayer structure according to the present invention has an ethylene content between at or about 15 mole percent to at or about 60 mole percent, more preferably between at or about 20 mole percent to at or about 50 mole percent and still more preferably between at or about 20 mole percent to at or about 35 mole percent. Suitable EVOH polymers for use in the multilayer structure according to the present invention may be obtained from Kuraray Ltd. under the trademark EVAL^{®} resins or from Nippon Gohsei under the trademark SOARNOL^{®}.

The one or more semi-aromatic copolyamides comprised in the polyamide composition described herein are selected from copolyamides made from:
a) group A monomers selected from:
   i) aromatic dicarboxylic acids having 8 to 20 carbon atoms and aliphatic diamines having 4 to 20 carbon atoms; or
   ii) aliphatic dicarboxylic acids having 6 to 20 carbon atoms and aromatic diamine having 6 to 20 carbon atoms; or
   iii) aromatic aminocarboxylic acids having 7 to 20 carbon atoms and
b) group B monomers selected from:
   iv) aliphatic dicarboxylic acids having 6 to 20 carbon atoms and aliphatic diamines having 4 to 20 carbon atoms; or
   v) lactams and/or aliphatic aminocarboxylic acids having 4 to 20 carbon atoms.
wherein the monomers of group A are present in an amount from at or about 10 mole-percent to at or about 40 mole-percent, preferably from at or about 15 mole-percent to at or about 35 mole-percent, based on the copolyamide, and the monomers of group B are present in an amount from at or about 60 mole-percent to at or about 90 mole-percent, preferably from at or about 65 mole-percent to at or about 85 mole-percent based on the copolyamide.

Suitable aromatic dicarboxylic acids having 8 to 20 carbon atoms include terephthalic acid, isophthalic acid, phthalic acid, 2-methyl terephthalic acid, diphenic acid, 1,5-naphthalenedicarboxylic acid, 2,6-naphthalenedicarboxylic acid, and 2,7-naphthalenedicarboxylic, 1,5-nathphalenedicarboxylic acid; 2,6-nathphalenedicarboxylic acid; terephthalic acid and isophthalic acid being preferred.

Suitable aliphatic dicarboxylic acids having 6 to 20 carbon atoms include adipic acid (C6), pimelic acid (C7), suberic acid (C8), azelaic acid (C9), decanedioic acid (C10), undecanedioic acid (C11), dodecanedioic acid (C12), tridecanedioic acid (C13), tetradecanedioic acid (C14), and pentadecanedioic acid (C15), hexadecanoic acid (C16), octadecanoic acid (C18) and eicosanoic acid (C20).

Suitable aliphatic diamines having 4 to 20 carbon atoms include tetramethylene diamine, hexamethylene diamine, octamethylene diamine, nonamethylenediamine, decamethylene diamine, dodecamethylene diamine, 2-methylpentamethylene diamine, 2-ethyltetramethylene diamine, 2-methyloctamethylenediamine, trimethylhexamethylenediamine, and bis(p-aminocyclohexyl)methane.

Suitable aromatic diamines having 6 to 20 carbon atoms include m-xylylenediamine and p-xylylenediamine.

Suitable aromatic aminocarboxylic acids having 7 to 20 carbon atoms include p-aminobenzoic acid, m-aminobenzoic acid, anthranilic acid 6-amino-2-naphthoic acid..

Suitable lactams include caprolactam and laurolactam.

A suitable aliphatic aminocarboxylic acid includes aminodecanoic acid.

Preferably, the one or more semi-aromatic copolyamides comprised in the polyamide composition described herein are selected from copolyamides made from: a) group A monomers selected from terephthalic acid and/or isophthalic acid and hexamethylenediamine; and (b) group B monomers selected from azelaic acid and hexamethylenediamine; decanedioic acid and hexamethylenediamine; undecanedioic acid and hexamethylenediamine; dodecanedioic acid and hexamethylenediamine; tridecanedioic acid and hexamethylenediamine; tetradecanedioic acid and hexamethylenediamine; caprolactam; laurolactam; and 11-aminoundecanoic acid.

Preferably, the one or more semi-aromatic copolyamides comprised in the polyamide composition described herein are selected from the group of copolyamides made from: a) group A monomers selected from terephthalic acid and hexamethylenediamine; and (b) group B monomers selected from azelaic acid and hexamethylenediamine; decanedioic acid and hexamethylenediamine; undecanedioic acid and hexamethylenediamine; dodecanedioic acid and hexamethylenediamine; tridecanedioic acid and hexamethylenediamine; tetradecanedioic acid and hexamethylenediamine; caprolactam; laurolactam; and 11-aminoundecanoic acid.

Still more preferably, the one or more semi-aromatic copolyamides comprised in the polyamide composition described herein are selected from copolyamides made from: a) group A monomers selected from terephthalic acid and hexamethylenediamine; and (b) group B monomers selected from decanedioic acid and hexamethylenediamine; and dodecanedioic acid and hexamethylenediamine, i.e. poly(hexamethylene decanediamide/hexamethylene terephthalamide) and poly(hexamethylene dodecanediamide/hexamethylene terephthalamide).

The copolyamides described herein may be prepared by any means known to those skilled in the art, such as in a batch process using, for example, an autoclave or using a continuous process. See, for example, Kohan, M.I. Ed. Nylon Plastics Handbook, Hanser: Munich, 1995; pp. 13-32. Generally, the monomers are allowed to react to form a random chain of interlinked monomers.

The polyamide composition described herein may further comprise one or more functionalized polyolefins. The one or more functionalized polyolefins may be used alone or may be used in combination with the one or more unfunctionalized polyolefins described below. The term "functionalized polyolefin" refers to an alkylcarboxyl-substituted polyolefin, which is a polyolefin that has carboxylic moieties attached thereto, either on the polyolefin backbone itself or on side chains. The term "carboxylic moiety" refers to carboxylic groups, such as carboxylic acids, carboxylic acid ester, carboxylic acid anhydrides and carboxylic acid salts.

Functionalized polyolefins may be prepared by direct synthesis or by grafting. An example of direct synthesis is the polymerization of ethylene and/or at least one alpha-olefin with at least one ethylenically unsaturated monomer having a carboxylic moiety. An example of grafting process is the addition of at least one ethylenically unsaturated monomer having at least one carboxylic moiety to a polyolefin backbone. The ethylenically unsaturated monomers having at least one carboxylic moiety may be, for example, mono-, di-, or polycarboxylic acids and/or their derivatives, including esters, anhydrides, salts, amides, imides, and the like. Suitable ethylenically unsaturated monomers include methacrylic acid; acrylic acid; ethacrylic acid; glycidyl methacrylate; 2-hydroxy ethylacrylate; 2-hydroxy ethyl methacrylate; diethyl maleate; monoethyl maleate; di-n-butyl maleate; maleic anhydride; maleic acid; fumaric acid; mono- and disodium maleate; acrylamide; glycidyl methacrylate; dimethyl fumarate; crotonic acid, itaconic acid, itaconic anhydride; tetrahydrophthalic anhydride; monoesters of these dicarboxylic acids; dodecenyl succinic anhydride; 5-norbornene-2,3-anhydride; nadic anhydride (3,6-endomethylene-1,2,3,6-tetrahydrophthalic anhydride); nadic methyl anhydride; and the like. Since polyolefins are incompatible with polyamides, it is necessary to modify them with functional groups that are capable of reacting with the acid or amine ends of the polyamide polymer. Due to the fact that the reaction of an anhydride with an amine is very fast, anhydrides are preferred grafting agents and more preferably maleic anhydride is chosen.

Preferably, the one or more functionalized polyolefins are one or more grafted polyolefins. The grafting agents, i.e. the at least one monomer having at least one carboxylic moiety, is preferably present in the one or more functionalized polyolefins in an amount from at or about 0.05 to at or about 6 weight percent, preferably from at or about 0.1 to at or about 2.0 weight percent, the weight percentages being based of the total weight of the one or more functionalized polyolefins.

Grafted polyolefins are preferably derived by grafting at least one monomer having at least one carboxylic moiety to a polyolefin, an ethylene alpha-olefin or a copolymer derived from at least one alpha-olefin and a diene. Preferably, the polyamide composition described herein comprises grafted polyolefins selected from grafted polyethylenes, grafted polypropylenes, grafted ethylene alpha-olefin copolymers, grafted copolymers derived from at least one alpha-olefin and a diene and mixtures thereof. More preferably, the polyamide composition described herein comprises maleic anhydride grafted polyolefins selected from maleic anhydride grafted polyethylenes, maleic anhydride grafted polypropylenes, maleic anhydride grafted ethylene alpha-olefin copolymers, maleic anhydride grafted copolymers derived from at least one alpha-olefin and a diene and mixtures thereof.

Polyethylenes used for preparing maleic anhydride grafted polyethylene (MAH-g-PE) are commonly available polyethylene resins selected from HDPE (density higher than 0.94 g/cm³), LLDPE (density of 0.915 - 0.925 g/cm³) or LDPE (density of 0.91 - 0.94 g/cm³). Polypropylenes used for preparing maleic anhydride grafted polypropylene (MAH-g-PP) are commonly available copolymer or homopolymer polypropylene resins.

Ethylene alpha-olefins copolymers comprise ethylene and one or more alpha-olefins, preferably the one or more alpha-olefins have 3-12 carbon atoms. Examples of alpha-olefins include but are not limited to propylene, 1-butene, 1-pentene, 1-hexene-1, 4-methyl 1-pentene, 1-heptene, 1-octene, 1-nonene, 1-decene, 1-undecene and 1-dodecene. Preferably the ethylene alpha-olefin copolymer comprises from at or about 20 to at or about 96 weight percent of ethylene and more preferably from at or about 25 to at or about 85 weight percent; and from at or about 4 to at or about 80 weight percent of the one or more alpha-olefins and more preferably from at or about 15 to at or about 75 weight percent, the weight percentages being based on the total weight of the ethylene alpha-olefins copolymers. Preferred ethylene alpha-olefins copolymers are ethylene-propylene copolymers and ethylene-octene copolymers.

Copolymers derived from at least one alpha-olefin and a diene are preferably derived from alpha-olefins having preferably 3-8 carbon atoms. Preferred copolymers derived from at least one alpha-olefin and a diene are ethylene propylene diene elastomers. The term "ethylene propylene diene elastomers (EPDM)" refers to any elastomer that is a terpolymer of ethylene, at least one alpha-olefin, and a copolymerizable non-conjugated diene such as norbornadiene, 5-ethylidene-2-norbornene, dicyclopentadiene, 1,4-hexadiene and the like. When a functionalized ethylene propylene diene elastomer is used in the polyamide composition described herein, the ethylene propylene diene polymer preferably comprise from at or about 50 to at or about 80 weight percent of ethylene, from at or about 10 to at or about 50 weight percent of propylene and from at or about 0.5 to at or about 10 weight percent of at least one diene, the weight percentages being based on the total weight of the ethylene propylene diene elastomer.

When present, the one or more functionalized polyolefins are preferably present in the polyamide composition described herein in an amount from at or about 5 to at or 40 weight percent and more preferably from at or about 10 to at or 30 weight percent, the weight percentages being based on the total weight of the polyamide composition.

The polyamide composition described herein may further comprise one or more unfunctionalized polyolefins. The one or more unfunctionalized polyolefins may be used alone or may be used in combination with the one or more functionalized polyolefins described above. Preferably, the one or more unfunctionalized polyolefins are used in combination with the one or more functionalized polyolefins described above. Preferably, the one or more unfunctionalized polyolefins are selected from unfunctionalized polyethylenes, unfunctionalized polypropylenes, unfunctionalized ethylene alpha-olefin copolymers such as those described above, unfunctionalized ethylene propylene diene rubbers (EPDM) such as those described above and mixtures thereof. When present, the one or more unfunctionalized polyolefins are preferably present in the polyamide composition described herein in an amount from at or about 5 to at or 40 weight percent and more preferably from at or about 10 to at or 30 weight percent, the weight percentages being based on the total weight of the polyamide composition.

The resin composition described herein may further comprise one or more ionomers. Ionomers are thermoplastic resins that contain metal ions in addition to the organic backbone of the polymer such as for example ionic copolymers of an olefin such as ethylene with partially neutralized (from 10 to 99.9%) alpha, beta-unsaturated C₃-C₈ carboxylic acid. Preferred alpha, beta-unsaturated C₃-C₈ carboxylic acids are s acrylic acid (AA), methacrylic acid (MAA) or maleic acid monoethylester (MAME). Neutralizing agents are alkali metals like lithium, sodium or potassium or transition metals like manganese or zinc. When present, the one or more ionomers are preferably present in the polyamide composition described herein in an amount from at or about 5 to at or 40 weight percent and more preferably from at or about 10 to at or 30 weight percent, the weight percentages being based on the total weight of the polyamide composition. Suitable ionomers for use in the present invention are commercially available under the trademark Surlyn^{®} from E. I. du Pont de Nemours and Company, Wilmington, Delaware.

The polyamide composition described herein may further comprise one or more plasticizers. Preferably, the one or more plasticizers are selected from sulfonamides, esters of hydroxybenzoic acids, tetrahydrofurfuryl alcohol esters or ethers, esters of citric acid or of hydroxymalonic acid and mixtures thereof. Examples of plasticizer include without limitation sulfonamides, esters of hydroxybenzoic acids, such as ethyl p-hydroxybenzoate, 2-ethylhexyl para-hydroxybenzoate, octyl p-hydroxybenzoate, 2-decylhexyl para-hydroxybenzoate or isohexadecyl p-hydroxybenzoate; tetrahydrofurfuryl alcohol esters or ethers, such as oligoethoxylated tetrahydrofurfuryl alcohol; esters of citric acid or of hydroxymalonic acid, such as oligoethoxylated malonate. Mention may also be made of decylhexyl para-hydroxybenzoate and ethylhexyl para-hydroxybenzoate. Preferably, the one or more plasticizers are sulphonamides and more preferably aromatic sulfonamides such as benzenesulfonamides and toluenesulfonamides. Examples of suitable aromatic sulfonamides include *N*-alkyl benzenesulfonamides and toluenesufonamides, such as N-butylbenzenesulfonamide (BBSA), N-(2-hydroxypropyl)benzenesulfonamide, N-cyclohexyltoluenesulphonamide; N-n-octyltoluenesulfonamide, N-2-ethylhexylbenzenesulfonamide, N-ethyl-o-toluenesulfonamide, N-ethyl-p-toluenesulfonamide, o-toluenesulfonamide, p-toluenesulfonamide, and the like. Preferred aromatic sulfonamides are N-butylbenzenesulfonamide, N-ethyl-o-toluenesulfonamide, and N-ethyl-p-toluenesulfonamide, are N-butylbenzenesulfonamide being particularly preferred. When present, the one or more plasticizers are preferably present in the polyamide composition described herein in an amount from at or about 1 to at or 20 weight percent and more preferably from at or about 5 to at or 15 weight percent, the weight percentages being based on the total weight of the polyamide composition. The plasticizer may be incorporated into the polyamide composition by melt-blending the polymer with plasticizer and, optionally, other ingredients, or during polymerization. If the plasticizer is incorporated during polymerization, the polyamide monomers are blended with one or more plasticizers prior to starting the polymerization cycle and the blend is introduced to the polymerization reactor. Alternatively, the plasticizer can be added to the reactor during the polymerization cycle.

The polyamide composition described herein may further comprise one or more heat stabilizers. Preferably, the one or more heat stabilizers are selected from copper salts and/or copper salt derivatives such as for example copper halides or copper acetates; divalent manganese salts and/or derivatives thereof and mixtures thereof. Preferably, copper salts are used in combination with halide compounds and/or phosphorus compounds and more preferably copper salts are used in combination with iodide or bromide compounds, and still more preferably, with potassium iodide or potassium bromide. When present, the one or more heat stabilizers are preferably present in the polyamide composition described herein in an amount from at about 0.1 to about 3 weight percent and preferably from at or about 0.1 to at or about 1 weight percent, the weight percentages being based on the total weight of the polyamide composition.

The polyamide composition described herein may further comprise one or more antioxidants such as phosphorus stabilizers (e.g. phosphate or phosphonite stabilizers), hindered phenol stabilizers, hindered amine stabilizers, aromatic amine stabilizers, thioesters, and phenolic based antioxidants that hinder thermally induced oxidation of polymers where high temperature applications are used. Preferably, the one or more antioxidants are selected from hindered phenol stabilizers, hindered amine stabilizers, phosphorus antioxidants and mixtures thereof. When present, the one or more antioxidants are preferably present in the polyamide composition described herein in an amount from at or about 0.1 to at or about 3 weight percent and preferably from at or about 0.1 to at or about 1 weight percent, the weight percentages being based on the total weight of the polyamide composition.

The polyamide composition described herein may further comprise modifiers and other ingredients, including, without limitation, lubricants and mold release agents (including stearic acid, stearyl alcohol and stearamides, and the like), flame retardants, antistatic agents, coloring agents (including dyes, pigments, carbon black, and the like), nucleating agents and other processing aids known in the polymer compounding art.

Polyamide compositions may further comprise fillers and reinforcing agents such as mineral fillers, glass fibers, nano particulates, and conductive fillers such as carbon black or carbon fiber, metal fibers and metal-coated fibers to impart electrical conductivity or capability to discharge static electrical charge that may build-up in the structure during use.

Modifiers and other ingredients described above may be present in the polyamide composition in amounts and in forms well known in the art, including in the form of so-called nano-materials where at least one of the dimensions of the particles is in the range of 1 to 1000 nm.

The polyamide compositions described herein are preferably melt-mixed blends, wherein all of the polymeric components are well-dispersed within each other and all of the non-polymeric ingredients are well-dispersed in and bound by the polymer matrix, such that the blend forms a unified whole. Any melt-mixing method may be used to combine the polymeric components and non-polymeric ingredients of the present invention. For example, the polymeric components and non-polymeric ingredients may be added to a melt mixer, such as, for example, a single or twin-screw extruder; a blender; a single or twin-screw kneader; or a Banbury mixer, either all at once through a single step addition, or in a stepwise fashion, and then melt-mixed. When adding the polymeric components and non-polymeric ingredients in a stepwise fashion, part of the polymeric components and/or non-polymeric ingredients are first added and melt-mixed with the remaining polymeric components and non-polymeric ingredients being subsequently added and further melt-mixed until a well-mixed composition is obtained.

The multilayer structures according to the present invention exhibit a good adhesion between the polyamide layer and the barrier layer without the need of a tie layer, and a good combination of flexibility, good barrier properties and good mechanical properties and are particularly suitable in applications where the multilayer structures are in contact with a fluid and more particularly with an automotive fuel such as gasoline, oxygenated and alcohol containing gasoline and diesel. The multilayer structure according to the present invention can have the form of a multilayer film, multilayer sheet, multilayer hollow body or a multilayer container. Preferably, the multilayer structure according to the present invention has the form of a hollow body and more preferably has the form of a hose, a pipe, a duct, a tube, tubing or a conduit, preferably with the barrier layer made of EVOH inside the polyamide layer.

Due to the advantages mentioned above, the multilayer structures having the form of a hollow body are particularly suitable for use in applications that require conveying a fluid, particularly a fuel and more particularly an automotive fuel. Examples of fuel are automotive fuels such as gasoline, oxygenated and alcohol containing gasoline and diesel.

While for many applications the multilayer structure having the form of a hollow body described herein can be circular in cross-section, other shapes including elliptical or other non-circular shapes are also contemplated. The walls of the multilayer structure of the present invention may be smooth or may comprise corrugated regions that are interrupted by smooth regions (hereafter called "partially corrugated multilayer structures") or can be corrugated all along its length (hereafter called "continuously corrugated multilayer structures"). Continuously or partially corrugated multilayer structure according to the present invention enable complex routing of the structure in constrained spaces, such as those available in underhood areas of automobiles and other vehicles.

The multilayer structure according to the present invention may be manufactured by any melt extrusion process including co-extrusion, blow molding or injection molding, co-extrusion being preferred. In a multilayer co-extrusion process, separate extruders are used to extrude each type of polymeric composition. The temperature settings and other processing conditions for the extruders are arranged such that they are appropriate to the composition being extruded. This avoids having to expose lower melting polymeric compositions to higher than normal processing temperatures during the extrusion step while allowing the extrusion of higher melting polymeric compositions at a suitable temperature. The individual melts from the extrusion streams are combined together in a suitably designed die and arranged in the desired multilayer arrangement. Examples of co-extrusion process include profile extrusion and corrugated extrusion. Profile extrusion and corrugated extrusion are conventional techniques used for manufacturing hollow plastic bodies in arbitrary long lengths. During profile and corrugated extrusion, the composition is extruded in a hot moldable state through the gap between the pin and the die of an extrusion head. By "profile extrusion", it is meant a technique used to produce a hollow article having the same cross section over a long length. The pin and die are shaped to produce the desired cross-section, and for example an annular die-gap between concentric circular pin and die is used to make tubes and pipes. After it exits the die assembly, the melt may be drawn to a thinner cross section through an air gap. The melt is then cooled and its shape is maintained. By "corrugated extrusion", it is meant a technique used to produce hollow articles comprising corrugated regions that may be interrupted by smooth regions. In this case, the pin and the die are positioned inside the two halves of the mold blocks of the equipment. When the molten material coming from the extrusion head reaches the mold blocks, it is drawn up to the shape of the mold article either by heated air or by vacuum expansion against the surface of the mold cavity. Such process is described for example in U.S. Pat. No. 6,764,627 and ,319,872 and Int'I. Pat. App. Pub. No. WO 03/055664.

The total thickness of the multilayer structure may be chosen depending on the end-use application. The ratio of the thickness of the polyamide layer and the barrier layer of the multilayer structure according to the present invention are determined so as to meet the functional requirements such as for example flexibility, mechanical properties, and/or barrier properties at an optimal cost. It is preferred that the polyamide layer of the multilayer structure of the present invention has a wall thickness which ranges from at or about 50 to at or about 95 percent, preferably from at or about 50 to at or about percent 80 %, and the barrier layer has a wall thickness ranges from at or about 5 to at or about 50 percent, preferably from at or about 20 to at or about 50 percent, the percentages being based on the total wall thickness of the multilayer structure.

The multilayer structure according to the present invention may further comprise one or more additional layers. Examples of additional layers include layers of a conductive polymer, layers of reground material that is recovered from production waste or is recycled, and multiple barrier layers. The barrier layer made of EVOH may form the innermost layer (in direct contact with the contained fluid) or the multilayer structure may further comprise other innermost layers. The polyamide layer described herein may form the outermost layer (in direct contact with the environment) or the multilayer structure may comprise other outermost layers.

Example of other innermost layers include without limitation polyamide materials such as those comprising semi-aromatic copolyamides described above, PA 6, PA 66 and polyesters such as PBT and TEE and may be further modified for static charge dissipation.

Examples of other outermost layers include elastomeric layers, functional layers and/or combinations thereof. Preferred elastomeric materials are selected from chloroprene rubbers, ethylenepropylene rubbers (EPR), ethylene-propylenediene rubbers (EPDM), acrylonitrile-butadiene rubbers (NBR), chlorinated polyethylene, acrylate rubbers, hydrogenated acrylonitrile-butadiene rubbers (HNBR), epichlorohydrin rubbers (ECO), chlorosulfonated polyethylenes, silicone rubbers, plasticized PVCs and mixtures thereof.

Functional layers include but are not limited to braidings, reinforcement layers, thermal shields and softer cover layers. Examples of braidings may be filament braidings with polyamide, aramid, polyethylene terephthalate (PET) or metallic filaments and woven fabrics of these materials. Examples of thermal shields may be metallic foils such as aluminum foils. Examples of softer cover layers may be layers made of rubber or of a thermoplastic elastomer).

In one aspect, the present invention relates to the use of the multilayer structure described herein for conveying a fluid, preferably fuel.

In another aspect, the present invention relates to a method for conveying a fluid, preferably fuel, comprising passing the fluid, preferably fuel, through the multilayer structure described herein.

### EXAMPLES

The Examples below provide greater detail for the compositions, uses and processes described herein.

The following materials were used for preparing the multilayer structures of the present invention and comparative examples.

### Materials

EVOH: an ethylene vinyl alcohol copolymer having an ethylene content of about 32 mole percent and being supplied by Kuraray Ltd., under the name EVAL^{®} F171 214.

Polyamide PA612/6T 1: copolyamide made from A) group A monomers consisting of terephthalic acid and hexamethylenediamine; and b) group B monomers consisting of dodecanedioic acid and hexamethylenediamine, wherein the monomers of group A are present in an amount of 25 mole-percent and the monomers of group B are present in an amount of 75 mole-percent, the mole-percent being based on the copolyamide. Polyamide PA612/6T 2: copolyamide made from A) group A monomers consisting of terephthalic acid and hexamethylenediamine; and b) group B monomers consisting of dodecanedioic acid and hexamethylenediamine, wherein the monomers of group A are present in an amount of 30 mole-percent and the monomers of group B are present in an amount of 70 mole-percent, the mole-percent being based on the copolyamide. Polyamide PA12: plasticized PA12 supplied by EMS, Sumter, SC, USA, under the tradename Grilamid L25FVS40.

Polyamide PA612: supplied by E. I. du Pont de Nemours and Company , Wilmington, Delaware, USA under the tradename Zytel^{®}. MAH-g-ethylene octene copolymer: ethylene octene copolymer comprising 72 weight percent of ethylene, 28 weight percent of octene and about 0.6 weight percent of grafted maleic anhydride.

Ethylene-octene polymer: a polymer comprising 72 weight percent of ethylene, 28 weight percent of octene supplied from Dow Chemicals under the name Engage™.

MAH-g-EPDM 1: a terpolymer of ethylene, propylene and norbornene comprising 70 weight percent of ethylene and 0.5 weight percent of norbornene and about 0.9 weight percent of grafted maleic anhydride MAH-g-EPDM 2: a terpolymer of ethylene, propylene and norbornene comprising 70 weight percent of ethylene and 0.5 weight percent of norbornene and about 0.4 weight percent of grafted maleic anhydride LLDPE: LLDPE with density of 0.919 g/cm³ and MFR of 1.2 g/10 min at 190°C, supplied by Borealis.

Functionalized LLDPE: MAH-grafted LLDPE with density of 0.918 g/ cm³ and MFR of 2 g/10 min 190°C.

Plasticizer: N-butyl benzene sulphonamide supplied by Unitex Chemical Corportation, Greensboro, NC, USA under the name Uniplex 214. Antioxidant 1: 4.4'-Bis(a.a-dimethylbenzyl)diphenylamine supplied by Chemtura Corporation, Middlebury, Conn., USA under the tradename Naugard^{®} 445.

Antioxidant2: 4,4'-butylidenebis (6-tert-butyl-m-cresol)] supplied by Akron Chemicals, Akron, Ohio, USA under the name anitoxidant 383-SWP

Antioxidant 3: tris(2,4-ditert-butylphenyl)phosphite supplied by Ciba Specialty Chemicals, Tarrytown, New York, USA under the tradename Irgafox^{®} 168.

Heat stabilizer: mixture of potassium iodide, copper iodide and aluminum distearate in a 7:1:1 ratio.

Carbon black masterbatch: masterbatch comprising 45 weight percent of carbon black in an ethylene methyl acrylate resin.

Compounding of the compositions. The compositions of the Example E1, E2, E3 and E4 and Comparative Examples C3 and C4 were prepared by melt blending ingredients shown in Table 1 in a ZSK 25 mm twin screw extruder operating at about 260°C and a throughput of about 15 kg/h. The compositions of comparative examples C1 and C2 and EVOH resin were used as available from their suppliers. Ingredient quantities shown in Table 1 are given in weight percent on the basis of the total weight of the polyamide composition. The compounded mixture was extruded in the form of laces or strands, cooled in a water bath, chopped into granules and placed into sealed aluminum lined bags in order to prevent moisture pick up. All materials were dried overnight at 70°C in a dehumidified drier prior to further use.

**Preparation of test specimens.** Two-layer structures were made by a co-extrusion process. The wall thickness consisted nominally of 25 percent inside layer material and 75 percent outside layer material (total thickness: 0.65 mm).

The extrusion setup consisted of three individual single-screw extruders connected to a three-layer tubing die. An extruder with a 30 mm single screw available from Polysystems and an extruder a 15 mm single screw available from Randcastle were both used for feeding the polyamide material of the outside layer of the multilayer structure; and a 25 mm single screw available from Bramag was used for feeding the EVOH material (as described in the "Materials" section) of the inside layer. The extrusion line was provided with a die with a 14 mm (0.55") die body and a 11.4 mm (0.45") pin. The line speed was in the range of 5.5-6 m/min (18-20 ft/min) range. The extruded tube was vacuum sized to the requisite dimensions using an 8.8 mm (0.348") sizer and 330 mm Hg (13") of vacuum. Polyamide compositions were extruded at temperatures profile of: 210 to 230°C for the composition used for the outside layer of the comparative example 1 and 2 (C1 and C2) and examples 1 and 2 (E1 and E2); 210 to 250°C for the composition used for the outside layer of the examples 3 and 4 (E3 and E4); and 190 to 225°C for EVOH used for the inside layer of all of the comparative examples 1 to 4 (C1-C4) and the inside layer of the examples 1 to 4 (E1-E4).

Compositions of the Examples (abbreviated as **"E"** in the Tables) and Comparative Examples (abbreviated as **"C"** in the Tables) are described in Table 1.

### Measurements

The adhesion between the polyamide layer and the EVOH barrier layer was first examined by cutting rectangular strips from the two-layer structures and pulling the layers apart. A value of "0" given in Table 1 corresponds to test specimens exhibiting no adhesion or wherein the two layers felt apart upon cutting the structure.

Adhesion was quantified by peel strength measurement following a procedure similar to that described in SAE J 2260 specification. Rectangular longitudinal strips measuring 125 mm x 6.25 mm were cut from the two-layer structures using a die cutter to obtain test specimens having straight, parallel and defect-free edges. One end of the strip was cut into a pointed tip so as to facilitate the manually pulling apart of the two layers. The layers were pulled apart to a length of 37.5 mm to provide tabs that can be gripped in an Instron tensile tester. Initial grip separation was 25 mm. The layers were then peeled apart at a constant crosshead speed of 50 mm/min up to a total crosshead displacement of 125 mm. Average peel force was determined in the displacement range of 12.5 mm to 100 mm, and peel strength was calculated as force per unit width of the strip (N/mm). The average values of peel strength obtained from five test specimens are given in Table 1.

**Table 1**

| | **C1** | **C2** | **C3** | **C4** | **E1** | **E2** | **E3** | **E4** |
|---|---|---|---|---|---|---|---|---|
| PA12 | 100 | - | - | - | - | - | - | - |
| PA612 | - | 100 | 71.0 | 59.9 | - | - | - | - |
| PA612/6T 1 | - | - | - | - | 65.1 | 66.1 | - | - |
| PA61216T 2 | - | - | - | - | - | - | 66.1 | 56.1 |
| MAH-g-ethylene octene copolymer | - | - | - | - | 12.5 | 15 | 15 | 20 |
| Ethylene-octene polymer | - | - | | | 12.5 | 15 | 15 | 20 |
| MAH-g-EPDM 1 | - | - | 19.4 | 4.2 | - | - | - | - |
| MAH-g-EPDM 2 | | | 4.2 | | | | | |
| LLDPE | - | - | - | 25 | - | - | - | - |
| Functionalized LLDPE | - | - | - | 10 | - | - | - | - |
| Plasticizer | - | - | 5 | - | 6 | - | - | - |
| Antioxidant 1 | - | - | - | 0.5 | 0.5 | 0.5 | 0.5 | 0.5 |
| Antioxidant 2 | - | - | - | - | 0.5 | 0.5 | 0.5 | 0.5 |
| Antioxidant 3 | - | - | - | 0.4 | 0.5 | 0.5 | 0.5 | 0.5 |
| heat stabilizer | - | - | 0.4 | - | 0.4 | 0.4 | 0.4 | 0.4 |
| Carbon black masterbatch | - | - | - | - | 2.0 | 2.0 | 2.0 | 2.0 |
| **Average peel strength to separate co-extruded layers / N mm⁻¹** | 0 | 0 | 0.4 | 0.6 | 1.2 | 1.8 | 2.0 | 2.3 |

As shown in Table 1, a comparative multilayer structure (**C1**) comprising a polyamide layer made of PA 12 (corresponding to a polyamide that is conventionally used in multilayer structures used for conveying fuels), exhibited no adhesion between the polyamide layer and the EVOH barrier layer. A similar poor performance was observed for a multilayer structure comprising a polyamide layer made of another aliphatic polyamide, i.e. PA612 (**C2**). The presence of one or more functionalized polyolefins (impact modifiers) in the composition of the polyamide layer of the comparative structures **C3** and **C4** slightly improved the adhesion of the polyamide layer to the EVOH barrier layer, however these multilayer structures comprising impact modified PA612 (**C3** and **C4**) suffered from unacceptably poor adhesion even when the MAH-g-polyolefins was present at 23.6 weight percent. Poor adhesion would result in the deterioration of the multilayer structure or its delamination under normal conditions of use leading to a reduction of mechanical properties.

In contrast, multilayer structures according the present invention, i.e. multilayers structures comprising a polyamide layer made of a semi-aromatic copolyamide and an EVOH barrier layer exhibited a strong adhesion between the layers. The data set forth in Table 1 demonstrates that samples **E1** to **E4** provided a stronger adhesion to an EVOH barrier layer than did the comparative samples **C1** to **C4.** In particular, a relatively high force of 1.2-2.3 N/mm was required to peel apart the layers of the multilayer structures according to the present invention (**E1** to **E4**) whereas a relatively weak force of 0-0.6 N/mm was sufficient to peel apart the layers of the comparative multilayer structures **(C1** to **C4).**

## Claims

1. A multilayer structure which is in the form of a hollow body for conveying fluid, wherein the hollow body is a tube comprising:
A) a polyamide layer made of a polyamide composition, and
B) a barrier layer made of ethylene vinyl alcohol copolymers (EVOH),
wherein the polyamide layer is directly adhered to the barrier layer, and
wherein the polyamide composition comprises one or more semi-aromatic copolyamides selected from copolyamides made from:
a) group A monomers selected from:
i) aromatic dicarboxylic acids having 8 to 20 carbon atoms and aliphatic diamines having 4 to 20 carbon atoms; or
ii) aliphatic dicarboxylic acids having 6 to 20 carbon atoms and aromatic diamine having 6 to 20 carbon atoms; or
iii) aromatic aminocarboxylic acids having 7 to 20 carbon atoms, and
b) group B monomers selected from:
iv) aliphatic dicarboxylic acids having 6 to 20 carbon atoms and aliphatic diamines having 4 to 20 carbon atoms; or
v) lactams and/or aliphatic aminocarboxylic acids having 4 to 20 carbon atoms,
wherein the monomers of group A are present in an amount from at or about 10 mole-percent to at or about 40 mole-percent based on the copolyamide, and the monomers of group B are present in an amount from at or about 60 mole-percent to at or about 90 mole-percent based on the copolyamide.

2. The multilayer structure according to claim 1, wherein the one or more semi-aromatic copolyamides are selected from copolyamides made from a) group A monomers selected from terephthalic acid and hexamethylenediamine; and (b) group B monomers selected from azelaic acid and hexamethylenediamine; decanedioic acid and hexamethylenediamine; undecanedioic acid and hexamethylenediamine; dodecanedioic acid and hexamethylenediamine; tridecanedioic acid and hexamethylenediamine; tetradecanedioic acid and hexamethylenediamine; caprolactam; laurolactam; and 11-aminoundecanoic acid.

3. The multilayer structure according to claim 1, wherein the one or more semi-aromatic copolyamides are selected from copolyamides made from a) group A monomers selected from terephthalic acid and hexamethylenediamine and (b) group B monomers selected from decanedioic acid and hexamethylenediamine; and dodecanedioic acid and hexamethylenediamine.

4. The multilayer structure according to any preceding claim, wherein the polyamide composition further comprises one or more functionalized polyolefins.

5. The multilayer structure according to claim 4, wherein the one or more functionalized polyolefins are selected from maleic anhydride grafted polyethylenes, maleic anhydride grafted polypropylenes, maleic anhydride grafted ethylene alpha-olefin copolymers, maleic anhydride grafted copolymers derived from at least one alpha-olefin and a diene and mixtures thereof.

6. The multilayer structure according to claim 4 or 5, wherein the one or more functionalized polyolefins are present in an amount from at or about 10 to at or about 30 weight percent, the weight percentages being based on the total weight of the polyamide composition.

7. The multilayer structure according to any preceding claim, wherein the polyamide composition further comprises one or more unfunctionalized polyolefins selected from unfunctionalized polyethylenes, unfunctionalized polypropylenes, unfunctionalized ethylene alpha-olefin copolymers, unfunctionalized ethylene propylene diene rubbers (EPDM) and mixtures thereof.

8. The multilayer structure according to claim 7, wherein the one or more unfunctionalized polyolefins are present in an amount from at or about 10 to at or about 30 weight percent, the weight percentages being based on the total weight of the polyamide composition.

9. The multilayer structure according to any preceding claim, wherein the polyamide composition further comprises one or more plasticizers selected from sulfonamides, esters of hydroxybenzoic acids, tetrahydrofurfuryl alcohol esters or ethers, esters of citric acid or of hydroxymalonic acid and mixtures thereof.

10. A use of the multilayer structure recited in any one of claims 1 to 9 for conveying a fluid.

11. The use according to claim 10, wherein the fluid is fuel.

12. A method for conveying a fluid comprising passing the fluid through the multilayer structure recited in any one of claims 1 to 9.

13. The method according to claim 12, wherein the fluid is fuel.

## Patentansprüche

1. Multisschichtstruktur, die in Form eines Hohlkörpers zum Befördern von Fluid gebildet ist, wobei der Hohlkörper eine Röhre ist, umfassend:
A) eine Polyamidschicht, die aus einer Polyamidzusammensetzung hergestellt ist, und
B) eine Barriereschicht, die aus Ethylen-Vinylalkohol-Copolymeren (EVOH) hergestellt ist, wobei die Polyamidschicht direkt an der Barriereschicht befestigt ist und
wobei die Polyamidzusammensetzung ein oder mehrere halbaromatische Copolyamide umfasst ausgewählt aus Copolyamiden, die hergestellt sind aus:
a) Monomeren der Gruppe A, ausgewählt unter
i) aromatischen Dicarbonsäuren, die 8 bis 20 Kohlenstoffatome aufweisen, und aliphatischen Diaminen, die 4 bis 20 Kohlenstoffatome aufweisen; oder
ii) aliphatischen Dicarbonsäuren, die 6 bis 20 Kohlenstoffatome aufweisen, und aromatischem Diamin, das 6 bis 20 Kohlenstoffatome aufweist; oder
iii) aromatischen Aminocarbonsäuren, die 7 bis 20 Kohlenstoffatome aufweisen und
b) Monomeren der Gruppe B ausgewählt unter:
iv) aliphatischen Dicarbonsäuren, die 6 bis 20 Kohlenstoffatome aufweisen, und aliphatischen Diaminen, die 4 bis 20 Kohlenstoffatome aufweisen; oder
v) Lactamen und/oder aliphatischen Aminocarbonsäuren, die 4 bis 20 Kohlenstoffatome aufweisen,
wobei die Monomere der Gruppe A in einer Menge von oder von etwa 10 Molprozent bis oder bis etwa 40 Mol Prozent, auf das Copolyamid bezogen, vorliegen und die Monomere der Gruppe B in einer Menge von oder von etwa 60 Molprozent bis oder bis etwa 90 Molprozent, auf das Copolyamid bezogen, vorliegen.

2. Multischichtstruktur nach Anspruch 1, wobei das eine oder die mehreren halbaromatischen Copolyamide aus Copolyamiden ausgewählt sind, die hergestellt sind aus a) Monomeren der Gruppe A, ausgewählt unter Terephthalsäure und Hexamethylendiamin; und (b) Monomeren der Gruppe B ausgewählt unter Azelainsäure und Hexamethylendiamin; Decandionsäure und Hexamethylendiamin; Undecandionsäure und Hexamethylendiamin; Dodecandionsäure und Hexamethylendiamin; Tridecandionsäure und Hexamethylendiamin; Tetradecandionsäure und Hexamethylendiamin; Caprolactam; Laurolactam; und 11-Aminoundecansäure.

3. Multischichtstruktur nach Anspruch 1, wobei der eine oder die mehreren halbaromatischen Copolyamide aus Copolyamiden ausgewählt sind, die hergestellt ist aus a) Monomeren der Gruppe A ausgewählt unter Terephthalsäure und Hexamethylendiamin und (b) Monomeren der Gruppe B ausgewählt unter Decandionsäure und Hexamethylendiamin; und Dodecandionsäure und Hexamethylendiamin.

4. Multischichtstruktur nach einem der vorhergehenden Ansprüche, wobei die Polyamidzusammensetzung ferner ein oder mehrere funktionalisierte Polyolefine umfasst.

5. Multischichtstruktur nach Anspruch 4, wobei das eine oder die mehreren funktionalisierten Polyolefine ausgewählt werden unter Maleinsäureanhydrid-gepfropften Polyethylenen, Maleinsäureanhydrid-gepfropften Polypropylenen, Maleinsäureanhydridgepfropften Ethylen-alpha-Olefin-Copolymeren, Maleinsäureanhydrid-gepfropften Copolymeren, die von mindestens einem Alpha-Olefin und einem Dien abgeleitet sind, und Mischungen davon.

6. Multischichtstruktur nach Anspruch 4 oder 5, wobei das eine oder die mehreren funktionalisierten Polyolefine in einer Menge von oder von etwa 10 bis oder bis etwa 30 Gewichtsprozent vorliegen, wobei die Gewichtsprozentsätze auf das Gesamtgewicht der Polyamidzusammensetzung bezogen sind.

7. Multischichtstruktur nach einem der vorhergehenden Ansprüche, wobei die Polyamidzusammensetzung ferner ein oder mehrere unfunktionalisierte Polyolefine umfasst ausgewählt unter unfunktionalisierten Polyethylenen, unfunktionalisierten Polypropylenen, unfunktionalisierten Ethylen-alpha-olefin-Copolymeren, unfunktionalisierten Ethylen-Propylen-Dien-Kautschuken (EPDM) und Mischungen davon.

8. Multischichtstruktur nach Anspruch 7, wobei das eine oder die mehreren unfunktionalisierten Polyolefine in einer Menge von oder von etwa 10 bis oder bis etwa 30 Gewichtsprozent vorliegen, wobei die Gewichtsprozentsätze auf das Gesamtgewicht der Polyamidzusammensetzung bezogen sind.

9. Multischichtstruktur nach einem der vorhergehenden Ansprüche, wobei die Polyamidzusammensetzung ferner einen oder mehrere Weichmacher umfasst ausgewählt unter Sulfonamiden, Estern von Hydroxybenzoesäuren, Tetrahydrofurfuryl-Alkoholestern oder -ethern, Estern von Zitronensäure oder von Hydroxymalonsäure und Mischungen davon.

10. Verwendung der in einem der Ansprüche 1 bis 9 aufgeführten Multischichtstruktur zum Befördern eines Fluids.

11. Verwendung nach Anspruch 10, wobei das Fluid Treibstoff ist.

12. Verfahren zum Befördern eines Fluids, umfassend das Hindurchführen des Fluids durch die in einem der Ansprüche 1 bis 9 aufgeführte Multischichtstruktur.

13. Verfahren nach Anspruch 12, wobei das Fluid Treibstoff ist.

## Revendications

1. Structure multicouche qui se présente sous la forme d'un corps creux pour le transport de fluide, où le corps creux est un tube comprenant:
A) une couche de polyamide constituée d'une composition de polyamide, et
B) une couche formant barrière constituée de copolymères d'éthylène-alcool de vinyle (EVOH), où la couche de polyamide adhère directement à la couche formant barrière, et
où la composition de polyamide comprend un ou plusieurs copolyamides semi-aromatiques sélectionnés parmi les copolyamides fabriqués à partir de:
a) les monomères du groupe A sélectionnés parmi:
i) les acides dicarboxyliques aromatiques ayant de 8 à 20 atomes de carbone et les diamines aliphatiques ayant de 4 à 20 atomes de carbone; ou
ii) les acides dicarboxyliques aliphatiques ayant de 6 à 20 atomes de carbone et une diamine aromatique ayant de 6 à 20 atomes de carbone; ou
iii) les acides aminocarboxyliques aromatiques ayant de 7 à 20 atomes de carbone, et
b) les monomères du groupe B sélectionnés parmi:
iv) les acides dicarboxyliques aliphatiques ayant de 6 à 20 atomes de carbone et les diamines aliphatiques ayant de 4 à 20 atomes de carbone; ou
v) les lactames et/ou les acides aminocarboxyliques aliphatiques ayant de 4 à 20 atomes de carbone,
où les monomères du groupe A sont présents en une quantité de ou d'environ 10 pour cent en mole jusqu'à ou jusqu'à environ 40 pour cent en mole sur la base du copolyamide, et les monomères du groupe B sont présents en une quantité de ou d'environ 60 pour cent en mole jusqu'à ou jusqu'à environ 90 pour cent en mole sur la base du copolyamide.

2. Structure multicouche selon la revendication 1, où le un ou plusieurs copolyamides semi-aromatiques sont sélectionnés parmi les copolyamides constitués de a) les monomères du groupe A sélectionnés parmi l'acide téréphtalique et l'hexaméthylènediamine; et (b) les monomères du groupe B sélectionnés parmi l'acide azélaïque et l'hexaméthylènediamine; l'acide décanedioïque et l'hexaméthylènediamine; l'acide undécanedioïque et l'hexaméthylènediamine; l'acide dodécanedioïque et l'hexaméthylènediamine; l'acide tridécanedioïque et l'hexaméthylènediamine; l'acide tétradécanedioïque et l'hexaméthylènediamine; le caprolactame; le laurolactame; et l'acide 11-aminoundécanoïque.

3. Structure multicouche selon la revendication 1, où le un ou plusieurs copolyamides semi-aromatiques sont sélectionnés parmi les copolyamides fabriqués à partir de a) les monomères du groupe A sélectionnés parmi l'acide téréphtalique et l'hexaméthylènediamine et (b) les monomères du groupe B sélectionnés parmi l'acide décanedioïque et l'hexaméthylènediamine; et l'acide dodécanedioïque et l'hexaméthylènediamine.

4. Structure multicouche selon l'une quelconque des revendications précédentes, où la composition de polyamide comprend en outre une ou plusieurs polyoléfines fonctionnalisées.

5. Structure multicouche selon la revendication 4, où la une ou les plusieurs polyoléfines fonctionnalisées sont sélectionnées parmi les polyéthylènes greffés à l'anhydride maléique, les polypropylènes greffés à l'anhydride maléique, les copolymères d'éthylène-alpha-oléfine greffés à l'anhydride maléique, les copolymères greffés à l'anhydride maléique dérivés d'au moins une alpha-oléfine et d'un diène et de leurs mélanges.

6. Structure multicouche selon la revendication 4 ou 5, où la une ou les plusieurs polyoléfines fonctionnalisées sont présentes en une quantité de ou d'environ 10 jusqu'à ou jusqu'à environ 30 pour cent en poids, les pourcentages en poids étant basés sur le poids total de la composition de polyamide.

7. Structure multicouche selon l'une quelconque des revendications précédentes, où la composition de polyamide comprend en outre une ou plusieurs polyoléfines non fonctionnalisées sélectionnées parmi les polyéthylènes non fonctionnalisés, les polypropylènes non fonctionnalisés, les copolymères d'éthylène-alpha-oléfine non fonctionnalisés, les caoutchoucs d'éthylène-propylène-diène non fonctionnalisés (EPDM) et leurs mélanges.

8. Structure multicouche selon la revendication 7, où la une ou les plusieurs polyoléfines non fonctionnalisées sont présentes en une quantité de ou d'environ 10 jusqu'à ou jusqu'à environ 30 pour cent en poids, les pourcentages en poids étant basés sur le poids total de la composition de polyamide.

9. Structure multicouche selon l'une quelconque des revendications précédentes, où la composition de polyamide comprend en outre un ou plusieurs plastifiants sélectionnés parmi les sulfonamides, les esters d'acides hydroxybenzoïques, les esters ou éthers d'alcool tétrahydrofurfuryle, les esters d'acide citrique ou d'acide hydroxymalonique et leurs mélanges.

10. Utilisation de la structure multicouche énoncée selon l'une quelconque des revendications 1 à 9 pour le transport d'un fluide.

11. Utilisation selon la revendication 10, où le fluide est du combustible.

12. Procédé de transport d'un fluide comprenant le passage du fluide à travers la structure multicouche énoncée selon l'une quelconque des revendications 1 à 9.

13. Procédé selon la revendication 12, où le fluide est du combustible.
